# FASCICULE DE BREVET EUROPEEN

(11) **EP 2 042 795 B1**
(45) Date de publication et mention de la délivrance du brevet: **22.12.2010**
(21) Numéro de dépôt: 08290895.5
(22) Date de dépôt: 23.09.2008
(51) Int. Cl.: F16L 17/03, F16L 33/207, F16L 37/084, F16L 37/088

(54) **Dispositif de raccordement étanche, en particulier pour un circuit d'admission d'air de moteur de véhicule automobile**
Vorrichtung zur dichten Verbindung, insbesondere eines Ansaugluftkreislaufs aus dem Motor eines Kraftfahrzeugs
Watertight connection device, in particular for an air intake circuit of an automobile engine

(30) Priorité: 26.09.2007 FR 0706732
(43) Date de publication de la demande: 01.04.2009
(73) Titulaire: Hutchinson, 75008 Paris (FR)
(72) Inventeur: Faillu, Jean-Luc, 45700 Villemandeur (FR); Godeau, Denis, 45260 Vieilles Maisons (FR)
(74) Mandataire: Bolinches, Michel Jean-Marie

(56) Documents cités:
- WO-A-03/091616
- WO-A-2005/103550
- DE-U1-202005 003 976

## Description

L'invention concerne un dispositif de raccordement étanche, en particulier mais non exclusivement pour un circuit d'admission d'air de moteur de véhicule automobile, ce dispositif étant destiné à être monté entre un tuyau souple et un embout rigide.

Dans la connectique air actuelle, on utilise essentiellement deux techniques de raccordement.

La première technique de raccordement est basée sur l'utilisation d'un collier de serrage pour fixer une extrémité du tuyau sur l'embout rigide. L'expérience montre que les fonctions d'étanchéité entre l'embout et le tuyau, d'une part, et de résistance à la traction du tuyau, d'autre part, ne peuvent être correctement assurées que par un effort de serrage important du collier sur l'embout.

La seconde technique de raccordement dite connectique rapide est basée sur l'utilisation d'un insert interne et d'une douille externe entre lesquelles une extrémité du tuyau est fixée par sertissage, un organe de verrouillage/déverrouillage assurant la fixation de l'insert et/ou de la douille sur l'embout.

L'expérience montre également que les fonctions d'étanchéité et de résistance à la traction ne peuvent être correctement assurées qu'en réalisant une opération de sertissage avec une force importante sur l'insert et/ou la douille.

Ces deux techniques de raccordement présentent des inconvénients, en particulier une mise en compression importante du tuyau qui entraîne un fluage du matériau et, à terme, un risque de coupure ou de déchirement du tuyau et une étanchéité défaillante, et un risque dé déboîtement du tuyau s'il n'est pas correctement positionné.

Le document de Brevet WO-A-03/091616 au nom de la Demanderesse a permis de s'affranchir de ces inconvénients en proposant un dispositif de raccordement dans lequel le profil de l'insert présente un bossage d'extrémité définissant une gorge recevant un joint d'étanchéité par exemple à lèvre qui est rapporté ou surmoulé dans cette gorge, cet insert délimitant notamment une première zone apte à assurer une fonction d'étanchéité entre l'insert, d'une part, et le tuyau et l'embout, d'autre part, et une deuxième zone apte à assurer la fonction de tenue à la traction du tuyau.

Bien que le dispositif décrit dans ce document procure des résultats d'étanchéité et de tenue à la traction satisfaisants, la Demanderesse a cherché a améliorer encore l'étanchéité obtenue via des joints à lèvre dans des conditions particulières de fonctionnement des lignes d'alimentation d'air des moteurs turbocompressés, qui sont notamment inhérentes, d'une part, aux températures élevées de l'air chargé d'huile circulant dans ces lignes et aux fortes contraintes dynamiques dites de « rotulage » existant entre l'embout interne « moteur » et ie tuyau externe qui engendrent des vibrations dans les trois directions, et, d'autre part, aux conditions de faible pression d'air qui caractérisent en particulier la phase de démarrage de ces moteurs.

En effet, il s'avère que l'air chargé d'huile circulant à température élevée - typiquement jusqu'à 225° C environ - dans ces lignes d'alimentation en air est susceptible de s'infiltrer entre l'embout « moteur » et le joint du fait de ces contraintes mécaniques auxquelles est soumis l'embout qui font en quelque sorte glisser la lèvre d'appui du joint sur cet embout, cette infiltration générant alors une condensation indésirable de l'huile sur la paroi plus froide environnante qui peut s'écouler sur celle-ci par gravité, notamment dans le cas d'un axe de symétrie vertical pour le dispositif de raccordement.

En outre, si les joints à lèvre viennent se plaquer de manière satisfaisante contre l'embout dans des conditions de haute pression d'air, par expansion radiale du joint provoquée par cette haute pression, il n'en va pas de même dans des conditions de dépression ou de faible pression dans la ligne où la lèvre du joint destinée à appuyer sur l'embout ne bénéficie pas du tout de cette expansion et où l'étanchéité à l'air peut alors laisser à désirer.

Les documents WO 2005/103550 et DE 20 2005 003 976 U1 montrent d'autres dispositifs de raccordement.

Un but de la présente invention est donc de proposer un dispositif de raccordement étanche pour un circuit transférant de l'air, en particulier pour un circuit d'admission d'air de moteur de véhicule automobile, ce dispositif étant destiné à être monté radialement entre un tuyau externe et un embout interne et comprenant au moins :
- un insert présentant une zone d'extrémité qui est apte à assurer une fonction d'étanchéité avec l'embout et qui comprend au moins un bossage délimitant une paroi axiale en saillie radialement vers l'extérieur destinée à venir en contact serré et étanche avec le tuyau, et
- un joint d'étanchéité annulaire à lèvre(s) dont la ou au moins une lèvre est destinée à appuyer de manière étanche sur l'embout en étant solidaire d'une face radialement interne de ce bossage,
qui remédie aux inconvénients précités en améliorant encore l'étanchéité obtenue à l'air notamment dans des conditions de haute température et de pression d'air réduite, tout en absorbant de manière satisfaisante les vibrations tridimensionnelles générées en fonctionnement et en minimisant les efforts de montage du joint sur l'embout.

A cet effet, un dispositif de raccordement selon l'invention est défini par les caractéristiques de la revendication 1.

On notera que ce bourrelet permet d'assurer une étanchéité très satisfaisante du joint selon l'invention vis-à-vis de l'embout indépendamment des contraintes mécaniques précités de « rotulage », du fait que ledit bourrelet vient appuyer radialement sur ce dernier de manière élastique à la manière d'un soufflet avec une force de contact d'intensité relativement élevée même en cas de dépression ou de pression très faible dans le circuit, et également du fait que le corps du joint est étroitement solidarisé avec le bossage de sorte à s'opposer au passage d'air à haute température chargé d'huile autour du joint.

On notera également que la ou chaque membrane du joint à lèvre(s) selon l'invention permet, grâce à la faible épaisseur qu'elle présente sur sa longueur relativement importante, de découpler la fonction d'étanchéité remplie par ce bourrelet de la fonction d'absorption des vibrations que cette membrane remplit efficacement en liaison avec ledit corps du joint, tant pour la plage des basses fréquences typiquement comprises entre 0 et 50 Hz lors de la phase de démarrage d'un moteur turbocompressé, que pour la plage des fréquences nominales usuellement comprises entre 50 Hz et 200 Hz.

On notera en outre que le joint à lèvre(s) selon l'invention qui est solidarisé avec le bossage de l'insert ne requiert pas des efforts de montage trop importants contre l'embout interne, ces efforts de montage étant avantageusement inférieurs à 5 daN pour ce joint selon l'invention.

De préférence, le ratio de l'épaisseur moyenne de la ou chaque membrane, mesurée entre ledit corps du joint et le bourrelet correspondant, sur l'épaisseur du bourrelet dans la direction radiale du joint (à l'état non contraint) est inférieur ou égal à 0,9.

A titre encore plus préférentiel, cette membrane présente une épaisseur moyenne, mesurée entre le corps du joint et le bourrelet, qui est comprise entre 0,2 mm et 0,9 mm, et ce bourrelet présente, dans la direction radiale du joint (toujours à l'état non contraint), une épaisseur qui est comprise entre 0,3 mm et 5 mm. En effet, la Demanderesse a vérifié qu'un joint avec une épaisseur moyenne de membrane inférieure à 0,2 mm ne donne pas de bons résultats d'étanchéité du fait d'une trop grande flexibilité de la membrane et, qu'à l'inverse, un joint avec une épaisseur moyenne de membrane supérieure à 0,9 mm n'est pas non plus souhaitable du fait qu'il est susceptible de se rompre prématurément, compte tenu du vieillissement thermique dont il est le siège en fonctionnement.

On notera que cette membrane est ainsi relativement fine en comparaison du bourrelet qui forme l'extrémité libre épaissie de la lèvre du joint selon l'invention, ce qui permet d'obtenir les résultats avantageux précités incluant une étanchéité améliorée à l'air et à l'huile à haute température et à basse pression, via la tension élastique radiale exercée par ce bourrelet, ainsi qu'une absorption satisfaisante des vibrations indépendamment de la pression d'air régnant dans le circuit.

Selon une autre caractéristique de l'invention, ce joint peut présenter un premier tronçon radialement externe de forme sensiblement cylindrique qui se prolonge sensiblement à angle droit à l'une de ses extrémités par un second tronçon sensiblement en forme de couronne pour former le corps du joint, la membrane s'étendant, à l'état non contraint du joint, de manière sensiblement conique à partir du second tronçon en convergeant vers le bourrelet en direction de l'autre extrémité du premier tronçon.

Selon une autre caractéristique préférentielle de l'invention, ce joint est solidarisé avec ledit insert via un surmouiage du bossage par injection d'un matériau destiné à former le joint, de telle sorte que tout ou partie dudit premier tronçon et/ou dudit second tronçon du joint soi(en)t solidaire(s) de ladite face interne de ce bossage.

De préférence, tant le premier tronçon que le second tronçon du joint selon l'invention sont respectivement surmoulés sur la face interne de ladite paroi axiale en saillie du bossage et sur une paroi de liaison sensiblement radiale reliant cette paroi en saillie avec le reste de l'insert, pour une étanchéité optimisée. Cependant, on notera que ce joint pourrait n'être solidarisé par surmoulage qu'avec cette paroi de liaison, sans sortir du cadre de l'invention.

Selon une autre caractéristique de l'invention, cette paroi de liaison sensiblement radiale peut former un épaulement pour ledit corps du joint, et ladite paroi axiale du bossage forme avantageusement une extrémité libre axialement interne de l'insert par rapport audit tuyau.

En d'autres termes, ce bossage de l'insert du dispositif de raccordement selon l'invention ne forme pas, à titre préférentiel, une gorge radiale recevant le joint, contrairement aux inserts de l'état antérieur de la technique dont la paroi axiale en saillie se prolonge par une paroi d'extrémité radiale délimitant une gorge avec ladite paroi de liaison, mais bien un épaulement ou collerette d'extrémité recevant sur sa face radialement interne ledit corps du joint.

Avantageusement, ledit premier tronçon du joint peut dépasser axialement de cette extrémité libre de l'insert (i.e. de ladite paroi axiale en saillie) en l'enrobant radialement sur au moins une partie de son épaisseur.

On notera que ce dépassement axial et au moins en partie radial de l'extrémité libre de l'insert par le joint permet de faciliter l'auto-centrage de cet insert en le guidant lors du montage entre l'embout et le tuyau, et également d'améliorer l'étanchéité entre l'insert et le tuyau, lequel est typiquement serti contre l'insert.

Selon l'invention, lesdites deux faces de la membrane comprennent une première face radialement externe tournée vers ladite paroi du bossage et une seconde face radialement interne qui est destinée à être tournée vers ledit embout et qui présenteavantageusement, entre ledit corps du joint et ledit bourrelet, une concavité continue de section axiale par exemple sensiblement en arc de cercle.

On notera que cette forme continûment concave de la face interne de la membrane permet d'optimiser encore le découplage précité entre étanchéité et absorption des vibrations tout en minimisant la rigidité du joint dans la direction radiale, permettant ainsi de maximiser le ratio étanchéité / rigidité radiale. En effet, la Demanderesse a mis en évidence que cette concavité réduit de manière significative, d'une part, les suintements d'huile entre l'embout et le bourrelet et, d'autre part, les risques de déchirement de la membrane lors de l'opération de démoulage du joint surmoulé sur l'insert.

Selon un premier mode préférentiel de réalisation de l'invention, le bourrelet présente, vu en section axiale et à l'état non contraint du joint, une forme oblongue dans la direction radiale. Vu en section axiale, ce bourrelet peut être alors sensiblement inscrit dans un rectangle dont les deux grands côtés prolongent respectivement lesdites première et seconde faces de la membrane et dont le petit côté radialement interne présente une surface convexe infléchissant la concavité de cette seconde face.

A titre encore plus préférentiel, cette surface convexe peut se prolonger sensiblement à angle droit par l'un des grands côtés du rectangle formant un méplat radial pour ce bourrelet, à l'état non contraint du joint.

On notera que ce méplat permet, d'une part, de faciliter encore le démoulage du joint surmoulé sur l'insert et, d'autre part, d'améliorer la compacité du joint ainsi obtenu.

Selon un second mode de réalisation de l'invention, ledit bourrelet peut présenter, vu en section axiale, un contour sensiblement circulaire lui conférant une géométrie globalement torique.

Selon un autre mode de réalisation de l'invention, ledit joint peut comporter, non pas une lèvre unique, mais une pluralité de lèvres d'étanchéité sensiblement parallèles entre elles qui incluent ladite ièvre destinée à appuyer sur l'embout, ou lèvre d'étanchéité principale, et au moins une lèvre d'étanchéité secondaire s'étendant à partir dudit corps de joint et destinée à appuyer soit sur l'embout en s'étendant radialement vers l'intérieur, soit sur le tuyau en s'étendant radialement vers l'extérieur.

Dans ce mode de réalisation, on notera que cette ou ces lèvre(s) d'étanchéité secondaire(s) peu(ven)t être identique(s) à la lèvre d'étanchéité principale définie ci-dessus en référence à ladite membrane et audit bourrelet, ou bien être structurellement différente(s) de cette lèvre d'étanchéité principale.

D'une manière générale, ledit insert peut être réalisé en un matériau métallique tel que l'acier inoxydable, l'aluminium, ou bien en une matière plastique de type thermoplastique ou thermodurcissable.

Avantageusement, ledit insert est métallique et le joint est à base d'au moins :
- un caoutchouc choisi dans le groupe constitué par les fluorocarbonés (FKM), les copolymères d'éthylène et d'acrylate de méthyle (EAM) et les fluorosiliconés (FVMQ) ; ou bien
- un élastomère thermoplastique appartenant à la famille des vulcanisats thermoplastiques (TPV).

Encore plus avantageusement, le joint présente une déformation rémanente à la compression (DRC) après 70 heures et à 200° C qui est inférieure à 20 %, mesurée selon la norme Peugeot (PSA) D 45 1132, et ce joint est de préférence à base d'un caoutchouc fluorocarboné (FKM).

A titre de comparaison, on notera que les joints à lèvre connus présentent usuellement une valeur de DRC après 70 heures et 200° C qui est supérieure à 40 %, voire à 50 %, et que cette valeur réduite pour la DRC du joint selon l'invention contribue à conférer des propriétés d'étanchéité pérennes à l'insert qui en est pourvu.

Selon une autre caractéristique de l'invention, ledit dispositif de raccordement peut comprendre en outre une douille externe destinée à serrer radialement une partie d'extrémité dudit tuyau de sorte à l'emprisonner par compression contre ledit insert, par exemple par sertissage, et un organe de verrouillage/déverrouillage de l'embout qui coopère avec ledit insert, par exemple actionnable en rotation pour passer d'une position de verrouillage à une position de déverrouillage et *vice versa.*

On notera que ledit insert peut comprendre en outre une butée axiale pour l'embout, telle qu'une rampe périphérique, un épaulement ou une patte en saillie sur l'insert, cette butée étant destinée à venir au contact d'un bossage périphérique correspondant de l'embout afin de limiter le degré de pénétration de ce dernier à l'intérieur de l'insert.

Avantageusement, le dispositif de raccordement selon l'invention est équipé dudit tuyau et dudit embout, qui sont respectivement réalisés en un matériau souple, par exemple du caoutchouc, et en un matériau rigide, par exemple métallique ou plastique.

De manière connue, ledit insert pénètre axialement vers l'intérieur de l'extrémité libre en regard du tuyau, et ladite douille externe est positionnée axialement vers l'extérieur dudit bossage (i.e. cette douille n'est pas montée en regard dudit bossage, mais de manière décalée dans la direction axiale par rapport à ce dernier).

D'autres avantages, caractéristiques et détails de l'invention ressortiront du complément de description qui va suivre en référence à des dessins annexés, donnés uniquement à titre d'exemple et dans lesquels :
la figure 1 est une vue partielle en demi-coupe axiale d'un dispositif de raccordement étanche pour connectique rapide selon l'art antérieur, comportant une douille externe et un insert interne pourvu d'un joint d'étanchéité à lèvre connu,
la figure 2 est une vue partielle en demi-coupe axiale d'un insert inclus dans un dispositif de raccordement étanche selon l'invention, dont est solidaire un joint à lèvre selon un exemple préférentiel d'un premier mode de l'invention,
la figure 3 est une vue partielle en demi-coupe axiale et à plus grande échelle d'un insert tel que celui de la figure 2 dont est solidaire un joint à ièvre selon une variante de ce premier mode de l'invention,
la figure 4 est une vue partielle en demi-coupe axiale de l'insert de la figure 3 dont est solidaire un joint à lèvre selon une autre variante,
la figure 5 est une vue partielle en demi-coupe axiale d'un dispositif de raccordement incorporant l'insert et le joint de la figure 3 à l'état contraint,
la figure 6 est une vue partielle en demi-coupe axiale d'un dispositif de raccordement incorporant l'insert et le joint de la figure 4 à l'état contraint,
la figure 7 est une vue partielle en demi-coupe axiale d'un insert tel que celui des figures 2 à 6, dont est solidaire un joint à deux lèvres selon un second mode de l'invention, et
la figure 8 est une vue partielle en demi-coupe axiale du même insert dont est solidaire un joint à deux lèvres selon un troisième mode de l'invention.

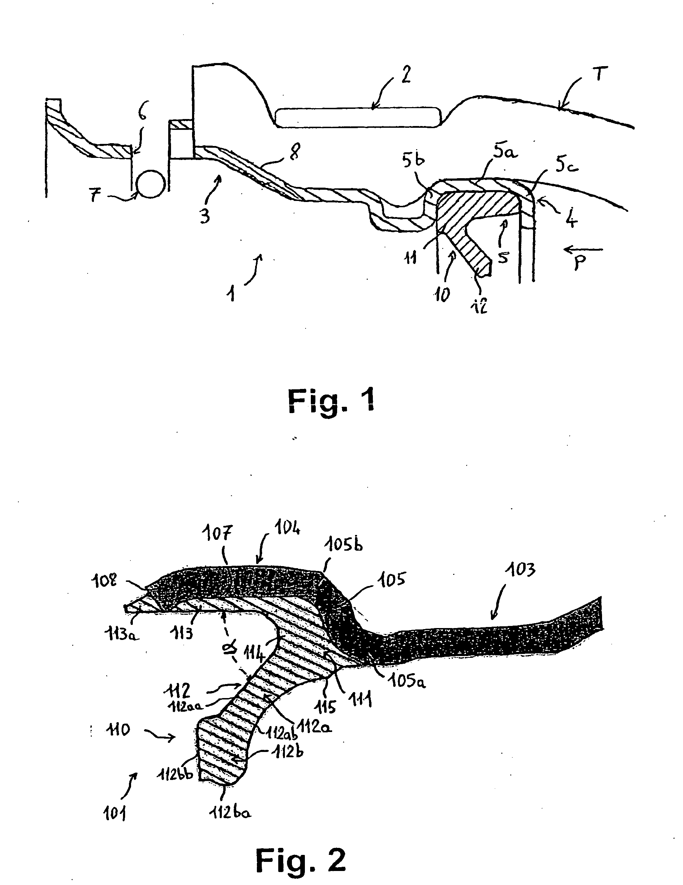

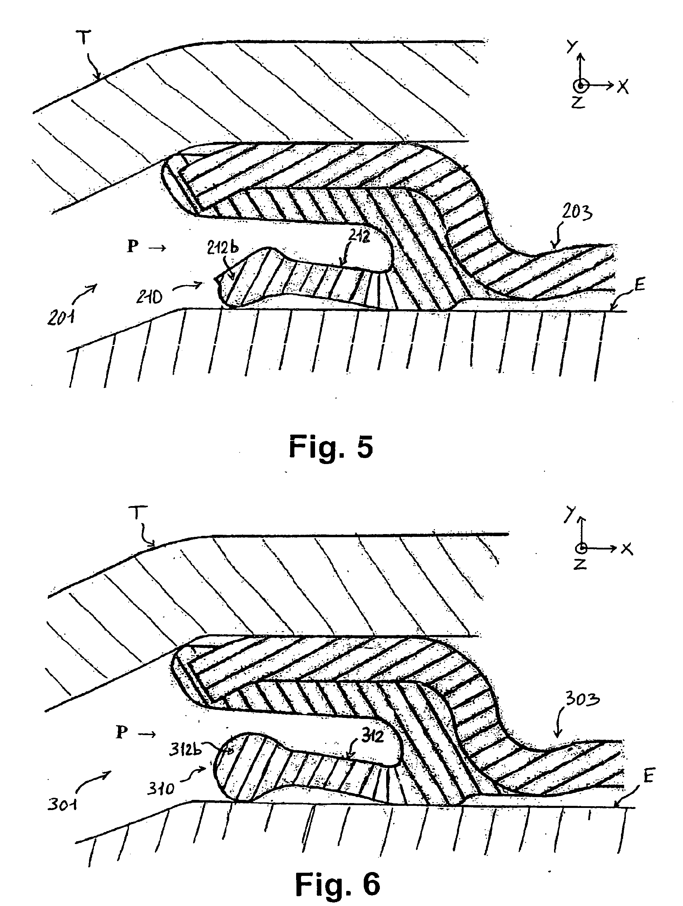

Un dispositif de raccordement étanche 1 de type connu dans la connectique air dite « rapide » est illustré à la figure 1 pour raccorder un tuyau souple T à un embout rigide E (visible aux figures 5 et 6). Le dispositif de raccordement 1 comprend notamment une douille 2 radialement externe et un insert 3 radialement interne entre lesquels est emprisonnée une partie d'extrémité du tuyau T, et ce dispositif 1 est conçu pour assurer l'étanchéité de l'insert 3 à la fois avec le tuyau T et avec l'embout E, ainsi qu'une fonction de retenue à la traction du tuyau T. Dans les modes de réalisation qui vont être décrits ci-après, le tuyau T est fixé entre la douille 2 et l'insert 3 par une opération de sertissage, mais cela n'est qu'un exemple, toute autre opération équivalente pour obtenir un résultat de même nature pouvant être envisagée.

L'insert 3 illustré à la figure 1 comprend, en son extrémité axialement interne (i.e. destinée à pénétrer axialement à l'intérieur du tuyau T), un bossage 4 formant une gorge 5 dans laquelle est logé un joint d'étanchéité à lèvre 10 destiné à venir se plaquer de manière étanche sur l'embout E et, à proximité de son extrémité axialement externe, cet insert 3 est pourvu d'une ouverture 6 munie d'un organe de verrouillage/déverrouillage 7, tel qu'une épingle ou un ressort à lame par exemple, pour immobiliser axialement l'embout E.

L'insert 3 comprend également une rampe 8 qui est formée axialement entre le bossage 4 et l'organe 7 et qui est destinée à former une butée axiale pour l'embout E en venant au contact d'un bossage périphérique de l'embout E afin de limiter le degré de pénétration de ce dernier à l'intérieur de l'insert 3.

Plus précisément, le joint d'étanchéité 10 de type connu illustré à la figure 1 est logé en appui, d'une part, contre la face radialement interne du fond axial 5a de la gorge 5 et, d'autre part, contre les deux parois latérales 5b et 5c sensiblement radiales de cette gorge 5 dont une paroi 5c définit en fait un rebord d'extrémité axialement interne pour l'insert 3. Ce joint 10 comprend un corps de joint 11 se prolongeant de manière oblique radialement vers l'intérieur par une lèvre 12 d'épaisseur constante qui est conçue pour exercer une tension radiale élastique sur l'embout E, avec notamment l'inconvénient précité d'une étanchéité à l'air et à l'huile défaillante entre cette lèvre 12 et l'embout E à des faibles pression d'air circulant à l'intérieur du dispositif de raccordement 1 (voir flèche P pour la direction de circulation de l'air), du fait d'un glissement de cette lèvre 12 à la surface de l'embout E.

Le dispositif de raccordement étanche 101 selon l'exemple préférentiel du premier mode de réalisation de l'invention qui est illustré à la figure 2 comporte un insert 103 présentant un bossage d'extrémité 104, avec la face radialement interne duquel est solidarisé un joint d'étanchéité 110. Ce bossage 104 présente sensiblement une forme de collerette d'extrémité à arêtes arrondies formant un épaulement recevant un corps 111 du joint 110. Cet épaulement est délimité par une paroi de liaison 105 sensiblement radiale qui est reliée sur sa face radialement interne au reste de l'insert 103 par un premier congé 105a convexe et qui se prolonge via un second congé 105b concave par une paroi axiale 107 formant le fond en saillie radiale du bossage 104 et en même temps l'extrémité axialement interne de l'insert 103. Plus précisément, on voit à la figure 2 que la paroi de fond 107 du bossage 104 se termine par un rebord d'extrémité 108 très légèrement rentrant radialement vers l'intérieur selon un angle aigu.

Selon l'invention, le joint 110 comporte une lèvre 112 qui est formée d'une fine membrane de découplage 112a sensiblement conique, à l'état non contraint du joint 110, et d'épaisseur moyenne proche de 0,7 mm, qui s'étend radialement vers l'intérieur à partir du corps de joint 111 et qui se termine avec une épaisseur radiale maximale d'environ 1 mm par un bourrelet 112b apte à venir se plaquer radialement contre l'embout E.

On notera que la finesse de la membrane 112a en comparaison du bourrelet 112b contribue à l'obtention de l'étanchéité améliorée à l'air et à l'huile à haute température et à basse pression, via la tension élastique radiale exercée par ce bourrelet 112b, ainsi que de l'absorption satisfaisante des vibrations indépendamment de la pression d'air.

Avantageusement, le corps de joint 111 est solidarisé avec la face radialement interne de tout ou partie de la paroi de fond 107 et/ou de la paroi de liaison 105, via un procédé de surmoulage de l'insert 103 par un matériau élastique destiné à former le joint 110. On obtient ainsi une adhésion étroite entre ce corps de joint 111 et l'insert 103.

Dans l'exemple préférentiel de la figure 2, le joint 110 présente un premier tronçon 113 radialement externe de forme sensiblement cylindrique qui est solidarisé avec la paroi de fond 107 en dépassant légèrement axialement le rebord d'extrémité 108 et en enrobant partiellement ce dernier dans la direction radiale. Comme visible à la figure 2, l'extrémité libre 113a du tronçon 113 forme dans cet exemple la pointe d'un biseau dont la surface conique radialement externe rejoint le rebord d'extrémité 108, et l'autre extrémité du tronçon 113 se prolonge sensiblement à angle droit par un second tronçon 114 qui est sensiblement en forme de couronne pour former le corps du joint 111 et qui est solidarisé via les deux congés 105a et 105b avec la paroi de liaison 105.

Comme illustré à la figure 2, la membrane 112a de la lèvre 112 que comporte le joint 110 s'étend à partir du second tronçon 114 en convergeant vers le bourrelet 112b en direction de l'extrémité vibre 113a du tronçon 113, de manière que cette membrane 112a forme avec le tronçon 113 un angle α compris entre 40° et 60° (à l'état non contraint du joint 110). Conformément à cet exemple préférentiel, la face radialement externe 112aa de la membrane 112a qui est tournée vers la paroi de fond 107 du bossage 104 présente une surface conique (i.e. oblique en section axiale). Quant à la face radialement interne 112ab de la membrane 112a qui est destinée à être tournée vers l'embout E, elle présente à partir d'un renflement circonférentiel 115 adjacent au tronçon 114 une concavité continue sensiblement en forme hyperboloïde de révolution (i.e. de section axiale pratiquement en arc de cercle).

Dans cet exemple de la figure 2, le bourrelet 112b présente, vu en section axiale et à l'état non contraint du joint 110, une forme oblongue dans la direction radiale, étant sensiblement inscrit dans un rectangle dont les deux grands côtés prolongent respectivement les deux faces 112aa et 112ab de la membrane 112 et dont le petit côté radialement interne présente une surface convexe 112ba infléchissant (i.e. avec une inversion de courbure) la concavité de la face interne 112ab. Cette surface convexe 112ba se prolonge sensiblement à angle droit par l'un des grands côtés du rectangle formant un méplat radial 112bb pour le bourrelet 112b, toujours à l'état non contraint du joint 110.

On notera que la forme concave de la face interne 112ab de la membrane 112a permet de minimiser la rigidité du joint dans la direction radiale, ce qui a pour effet de maximiser le ratio étanchéité / rigidité radiale, du fait que cette concavité contribue à s'opposer aux suintements d'huile entre l'embout E et le bourrelet 112b et au déchirement de la membrane 112a lors du démoulage du joint 110.

Pour la description suivante des autres exemples de réalisation d'un dispositif de raccordement selon l'invention, on a utilisé des références numériques à chaque fois augmentées de 100 pour des éléments de structure et/ou de fonction identiques.

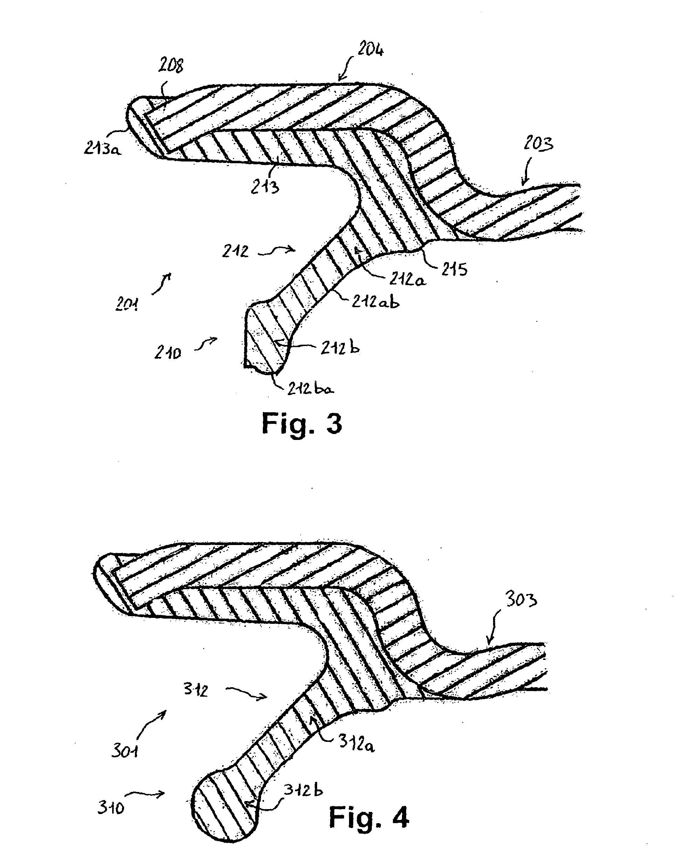

Le dispositif de raccordement étanche 201 selon une variante ne faisant pas partie de l'invention est illustrée à la figure 3 et se différencie uniquement de celui de la figure 2, en ce que :
- la face radialement interne 212ab de la membrane 212a que comprend la lèvre 212 du joint 210 présente une surface sensiblement conique en son centre qui est reliée au renflement circonférentiel 215 et à la surface convexe 212ba du bourrelet 212b respectivement par deux zones d'extrémité évasées, en lieu et place de la concavité continue caractérisant la face interne 112ab de la membrane 112a de la figure 2 ; et en ce que
- l'extrémité libre 213a du premier tronçon 213 forme dans cette variante un enrobage pour le rebord d'extrémité 208 du bossage 204, en lieu et place du biseau radialement externe de l'extrémité libre 113a du tronçon 113 de la figure 2.

Le dispositif de raccordement étanche 301 selon une autre variante illustrée à la figure 4 se différencie uniquement de celui de la figure 3, en ce que le bourrelet 312b qui prolonge la membrane 312a de la lèvre 312 du joint 310 présente, vu en section axiale, un contour sensiblement circulaire lui conférant une géométrie globalement torique.

Les figures 5 et 6 illustrent respectivement le montage des joints 210 et 310 solidaires des inserts 203 et 303 correspondants radialement entre un tuyau souple T en caoutchouc et un embout rigide E métallique, de sorte que la lèvre 212, 312 de chaque joint 210, 310 est comprimée dans la direction radiale du dispositif de raccordement 201, 301 correspondant. On a également représenté sur ces figures par la flèche P la direction d'écoulement de l'air sous pression parvenant entre le tuyau T et l'embout E.

Le compte rendu d'essais qui suit se rapporte à de tels joints 110, 210 et 310 selon l'invention qui ont tous été réalisés en un même caoutchouc flurocarboné (FKM) commercialisé par la société Dupont de Nemours. Ce caoutchouc a été vulcanisé pendant 12 minutes à 180° C puis pendant 6 heures à 200° C, et il présentait notamment les propriétés suivantes :
- dureté « DIDC » de 68 points,
- résistance à la rupture de 20,9 MPa,
- allongement à la rupture de 430 %,
- module à 30 % d'allongement de 1,11 MPa,
- masse volumique de 1,83 g/cm³, et
- déformation rémanente à la compression (DRC) après 70 heures et à 200° C de 15,5 % (mesurée selon la norme Peugeot (PSA) D 45 1132).

On a procédé à des mesures d'efforts de montage des joints 110, 210 et 310 au contact d'un tel embout E, et l'on a obtenu à chaque fois un effort de montage compris entre 1,2 et 4,0 daN, ce qui représente des efforts très réduits.

On a par ailleurs procédé à des mesures des pressions de contact sur les joints 110 et 210 des figures 2 et 3, respectivement, en termes de contraintes de Cauchy σ_{zz} (ZZ étant de manière connue l'axe orthoradial qui est à la fois perpendiculaire à la direction axiale XX et à la direction radiale YY), et l'on a obtenu les valeurs suivantes :
- pour le joint 110 à membrane 112a concave sur sa face interne 112ab (joint 110 de diamètre interne égal à 46,5 mm, d'épaisseur moyenne de membrane 112a égale à 0,7 mm et d'épaisseur radiale du bourrelet 112b égale à 1 mm), on a obtenu des pressions de contact σ_{zz} supérieures à 5 bars au montage, et supérieures à 9 bars sous une pression d'air de 2 bars ; et
- pour le joint 210 à membrane 212a sensiblement conique sur sa face interne 212ab (joint 210 de diamètre interne égal à 46,5 mm, d'épaisseur moyenne de membrane 212a égale à 0,9 mm et d'épaisseur radiale du bourrelet 212b égale à 1 mm), on a obtenu des pressions de contact σ_{zz} supérieures à 6 bars au montage, et supérieures à 8,5 bars sous une pression d'air de 2 bars.

On notera que ces pressions de contact témoignent d'une force de contact suffisante pour assurer une étanchéité efficace à l'air et à l'huile à haute température du joint 110, 210 selon l'invention avec l'embout E, à des pressions d'air réduites circulant dans le circuit.

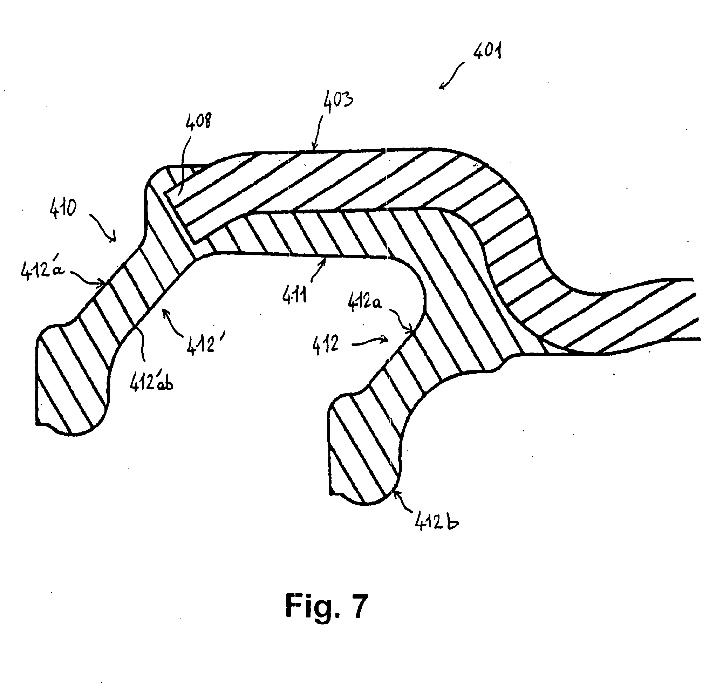

Le dispositif de raccordement étanche 401 selon le second mode de l'invention qui est illustré à la figure 7 se différencie uniquement de celui selon le premier mode illustré à la figure 2, en ce que le joint 410 qui est solidarisé avec l'insert 403 comporte, en plus d'une lèvre d'étanchéité principale 412 à membrane 412a et à bourrelet 412b selon l'invention qui est destinée à appuyer de manière étanche sur l'embout E, une lèvre d'étanchéité secondaire 412' qui est destinée à appuyer également sur cet embout E et qui s'étend radialement vers l'intérieur, de manière sensiblement parallèle à la lèvre 412, à partir du corps de joint 411 solidaire du rebord d'extrémité 408 de l'insert 403. Dans l'exemple de la figure 7, cette lèvre secondaire 412' est analogue à la lèvre 212 de la figure 3, et elle est légèrement plus courte que la lèvre principale 412, ce qui lui confère une force de contact moindre sur l'embout E.

Dans ce second mode, la face radialement interne 412'ab de la membrane 412'a de la lèvre secondaire 412' présente de préférence une surface sensiblement conique, qui se prête bien au démoulage du joint 410.

On notera que ce mode de réalisation est particulièrement bien adapté au cas où le tuyau T est réalisé en une matière souple, telle que du caoutchouc.

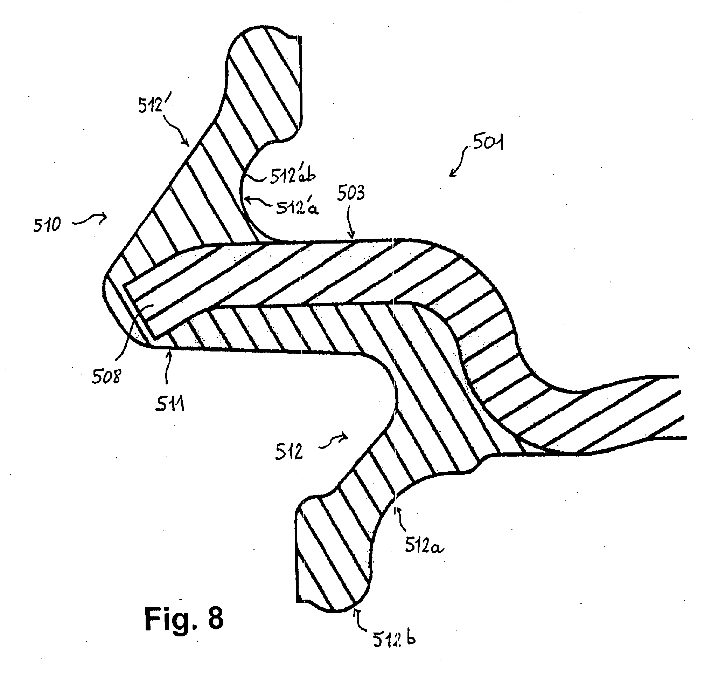

Le dispositif de raccordement étanche 501 selon le troisième mode de l'invention qui est illustré à la figure 8 se différencie uniquement de celui de la figure 7, en ce que le joint 510 qui est solidarisé avec l'insert 503 comporte, en plus d'une lèvre d'étanchéité principale 512 à membrane 512a et à bourrelet 512b qui est destinée à appuyer de manière étanche sur l'embout E, une lèvre d'étanchéité secondaire 512' qui est destinée à appuyer sur le tuyau T et qui s'étend radialement vers l'extérieur, de manière sensiblement parallèle à la lèvre 512, à partir du corps de joint 511 solidaire du rebord d'extrémité 508 de l'insert 503. Dans l'exemple de la figure 8, cette lèvre secondaire 512' est analogue à la lèvre principale 512, étant légèrement plus courte que cette dernière.

Dans ce quatrième mode, la face radialement interne 512'ab de la membrane 512'a de la lèvre secondaire 512' présente de préférence une surface de section axiale sensiblement en arc de cercle, qui se prête bien au démoulage du joint 510.

On notera que ce mode de réalisation est particulièrement bien adapté au cas où le tuyau T est réalisé en une matière plastique rigide.

## Revendications

1. Dispositif de raccordement (101, 401, 501) étanche, en particulier pour un circuit transférant de l'air, en particulier pour un circuit d'admission d'air de moteur de véhicule automobile, ce dispositif étant destiné à être monté radialement entre un tuyau externe (T) et un embout interne (E) et comprenant au moins :
- un insert (103, 403, 503) présentant une zone d'extrémité qui est apte à assurer une fonction d'étanchéité avec l'embout et qui comprend au moins un bossage (104) délimitant une paroi axiale (107) en saillie radialement vers l'extérieur destinée à venir en contact serré et étanche avec le tuyau, et
- un joint d'étanchéité annulaire à lèvre(s) (110, 410, 510) dont la ou au moins une lèvre (112, 412, 512) est destinée à appuyer de manière étanche sur l'embout en étant solidaire d'une face radialement interne de ce bossage,
**caractérisé en ce que** ladite ou l'une au moins desdites lèvre(s) destinée à appuyer sur l'embout comporte une membrane de découplage (112a, 412a, 512a) qui s'étend, à partir d'un corps du joint (111) solidaire dudit bossage, de manière oblique radialement vers l'intérieur à l'état non contraint du joint et qui se termine avec une épaisseur radiale maximale par un bourrelet (112b, 212b, 312b, 412b, 512b), lequel est apte à venir se plaquer radialement contre l'embout avec une pression de contact suffisante pour assurer l'étanchéité avec l'embout en particulier à des pressions d'air réduites dans le circuit, et ladite membrane étant apte à absorber les vibrations générées en utilisation, cette membrane comprenant une première face (112aa) radialement externe tournée vers ladite paroi (107) du bossage (104) et une seconde face (112ab) radialement interne qui est destinée à être tournée vers ledit embout et qui présente, entre ledit corps du joint et ledit bourrelet, une concavité continue de section axiale, c'est-à-dire une forme continûment concave, par exemple sensiblement en arc de cercle.

2. Dispositif de raccordement (101, 401, 501) selon la revendication 1, **caractérisé en ce que** ledit joint (110, 410, 510) présente un premier tronçon (113) radialement externe de forme sensiblement cylindrique qui se prolonge sensiblement à angle droit à l'une de ses extrémités par un second tronçon (114) sensiblement en forme de couronne pour former ledit corps du joint (111), ladite membrane (112a, 412a, 512a) s'étendant, à l'état non contraint du joint, de manière sensiblement conique à partir de ce second tronçon en convergeant vers ledit bourrelet (112b, 212b, 312b, 412b, 512b) en direction de l'autre extrémité (113a) du premier tronçon.

3. Dispositif de raccordement (101, 401, 501) selon la revendication 2, **caractérisé en ce que** ce joint (110, 410, 510) est solidarisé avec ledit insert (103, 403, 503) via un surmoulage dudit bossage (104) par injection d'un matériau destiné à former le joint, de telle sorte que tout ou partie dudit premier tronçon (113) et/ou dudit second tronçon (114) du joint soi(en)t solidaire(s) de ladite face interne de ce bossage.

4. Dispositif de raccordement (101, 401, 501) selon une des revendications 1 à 3, **caractérisé en ce que** ledit bourrelet (112b, 212b, 412b, 512b) présente, vu en section axiale et à l'état non contraint du joint (110, 410, 510), une forme oblongue dans la direction radiale.

5. Dispositif de raccordement (101, 401, 501) selon la revendication 4, **caractérisé en ce que**, vu en section axiale, ledit bourrelet (112b, 412b, 512b) est sensiblement inscrit dans un rectangle dont les deux grands côtés prolongent respectivement lesdites première et seconde faces (112aa et 112ab) de ladite membrane (112a, 412a, 512a) et dont le petit côté radialement interne présente une surface convexe (112ba) infléchissant la concavité de cette seconde face.

6. Dispositif de raccordement (101, 401, 501) selon la revendication 5, **caractérisé en ce que** cette surface convexe (112ba) se prolonge sensiblement à angle droit par l'un des grands côtés du rectangle formant un méplat radial (112bb) pour ce bourrelet (112b, 412b, 512b), à l'état non contraint du joint (110, 410, 510).

7. Dispositif de raccordement (101, 401, 501) selon une des revendications 1 à 3, **caractérisé en ce que** ledit bourrelet (312b) présente, vu en section axiale, un contour sensiblement circulaire lui conférant une géométrie globalement torique.

8. Dispositif de raccordement (101, 401, 501) selon une des revendications précédentes, **caractérisé en ce que** le ratio de l'épaisseur moyenne de ladite membrane (112a, 412a, 512a) mesurée entre ledit corps du joint (111) et ledit bourrelet (112b, 212b, 312b, 412b, 512b), sur l'épaisseur dudit bourrelet dans la direction radiale et à l'état non contraint du joint (110, 410, 510), est inférieur ou égal à 0,9.

9. Dispositif de raccordement (101, 401, 501) selon la revendication 8, **caractérisé en ce que** ladite membrane (112a, 412a, 512a) présente une épaisseur moyenne, mesurée entre ledit corps du joint (111) et ledit bourrelet (112b, 212b, 312b, 412b, 512b), qui est comprise entre 0,2 mm et 0,9 mm, et **en ce que** ledit bourrelet présente, dans la direction radiale dudit joint (110, 410, 510) à l'état non contraint, une épaisseur qui est comprise entre 0,3 mm et 5 mm.

10. Dispositif de raccordement (101, 401, 501) selon une des revendications précédentes, **caractérisé en ce que** ladite paroi axiale (107) en saillie que présente le bossage (104) est reliée au reste dudit insert (103, 403, 503) par une paroi de liaison (105) sensiblement radiale formant un épaulement pour ledit corps du joint (111), et **en ce que** cette paroi axiale du bossage forme une extrémité libre (108) axialement interne de l'insert par rapport audit tuyau (T).

11. Dispositif de raccordement (101, 401, 501) selon les revendications 2 et 10, **caractérisé en ce que** ledit premier tronçon (113) du joint (110, 410, 510) dépasse axialement de cette extrémité libre (108) de l'insert (103, 403, 503) en l'enrobant radialement sur au moins une partie de son épaisseur.

12. Dispositif de raccordement (101, 401, 501) selon une des revendications précédentes, **caractérisé en ce que** ledit insert (103, 403, 503) est métallique et **en ce que** ledit joint (110, 410, 510) est à base d'au moins :
- un caoutchouc choisi dans le groupe constitué par les fluorocarbonés (FKM), les copolymères d'éthylène et d'acrylate de méthyle (EAM) et les fluorosiliconés (FVMQ) ; ou bien
- un élastomère thermoplastique appartenant à la famille des vulcanisats thermoplastiques (TPV).

13. Dispositif de raccordement (101, 401, 501) selon la revendication 12, **caractérisé en ce que** ledit joint (110, 410, 510) présente une déformation rémanente à la compression (DRC) après 70 heures et à 200° C qui est inférieure à 20 % et est de préférence à base d'un caoutchouc flurocarboné (FKM).

14. Dispositif de raccordement (401, 501) selon une des revendications précédentes, **caractérisé en ce que** ledit joint (410, 510) comporte une pluralité de lèvres d'étanchéité (412, 412' ou 512, 512') sensiblement parallèles entre elles, qui incluent ladite lèvre (412 ou 512) destinée à appuyer sur l'embout (E) et au moins une lèvre d'étanchéité secondaire (412' ou 512') s'étendant à partir dudit corps de joint (411, 511) et destinée à appuyer soit sur l'embout en s'étendant radialement vers l'intérieur, soit sur le tuyau (T) en s'étendant radialement vers l'extérieur.

15. Dispositif de raccordement (101, 401, 501) selon une des revendications précédentes, **caractérisé en ce qu'**il comprend en outre une douille externe (2) destinée à serrer radialement une partie d'extrémité dudit tuyau (T) de sorte à l'emprisonner par compression contre ledit insert (103, 403, 503), et un organe de verrouillage/déverrouillage (7) de l'embout (E), par exemple actionnable en rotation pour passer d'une position de verrouillage à une position de déverrouillage et *vice versa.*

16. Dispositif de raccordement (101, 401, 501) selon une des revendications précédentes, **caractérisé en ce qu'**il est équipé dudit tuyau (T) et dudit embout (E) qui sont respectivement réalisés en des matériaux souple et rigide.

## Claims

1. Leaktight connection device (101, 401, 501), in particular for an air carrying circuit, in particular for an air intake circuit of an automobile engine, this device being intended to be mounted radially between an outer hose (T) and an inner connector (E) and comprising at least:
- one insert (103, 403, 503) having an end zone that is adapted to perform a sealing function with the connector and which comprises at least one boss (104) delimiting an axial wall (107) projecting radially outwards, intended to come into close, leaktight contact with the hose, and
- an annular sealing joint with lip(s) (110, 410, 510) wherein the or at least one lip (112, 412, 512) is adapted to bear on the connector in leaktight manner, being fixedly attached to a radially inner face of this boss,
**characterised in that** the said or the at least one of said lip(s) adapted to bear on the connector comprises an uncoupling membrane (112a, 412a, 512a) which extends, from a body of the joint (111) fixedly attached to the boss, radially obliquely inwards in the unstressed state of the joint, and which terminates with a maximum radial thickness in a bead (112b, 212b, 312b, 412b, 512b) which is adapted to press radially against the connector with a sufficient contact pressure to ensure a seal with the connector, particularly at reduced air pressures in the circuit, and the said membrane being adapted to absorb the vibrations generated in use, this membrane comprising a first radially outer surface (112aa) facing said wall (107) of the boss (104) and a second radially inner surface (112ab) which is intended to face towards said connector and which comprises, between the said body of the joint and the said bead, a continuous concave portion of axial section, i.e. with a continuously concave shape, for example substantially in the shape of an arc of a circle.

2. Connection device (101, 401, 501) according to claim 1, **characterised in that** the said joint (110, 410, 510) has a first radially outer section (113) of substantially cylindrical shape which is extended substantially at right angles to one of its ends by a second section (114) substantially in the shape of a crown, to form the said body of the joint (111), the said membrane (112a, 412a, 512a) extending, in the unstressed state of the joint, in a substantially conical manner from this second section, converging towards said bead (112b, 212b, 312b, 412b, 512b) in the direction of the other end (113a) of the first section.

3. Connection device (101, 401, 501) according to claim 2, **characterised in that** this joint (110, 410, 510) is fixedly attached to said insert (103, 403, 503) via an overmoulding of the said boss (104) by injecting a material adapted to form the joint, such that all or part of the said first section (113) and/or of the said second section (114) of the joint is or are fixedly attached to the said inner face of this boss.

4. Connection device (101, 401, 501) according to one of claims 1 to 3, **characterised in that** the said bead (112b, 212b, 312b, 412b, 512b) has an oblong shape in the radial direction, viewed in axial section and in the unstressed state of the joint (110, 410, 510).

5. Connection device (101, 401, 501) according to claim 4, **characterised in that**, viewed in axial section, the said bead (112b, 412b, 512b) is substantially inscribed in a rectangle the two long sides of which respectively prolong the first and second faces (112aa and 112ab) of the said membrane (112a, 412a, 512a) and the radially inner short side of which has a convex surface (112ba) that bends the concave portion of this second face.

6. Connecting device (101, 401, 501) according to claim 5, **characterised in that** this convex surface (112ba) is extended substantially at right angles by one of the long sides of the rectangle forming a radial flattened portion (112bb) for this bead (112b, 412b, 512b), in the unstressed state of the joint (110, 410, 510).

7. Connecting device (101, 401, 501) according to one of claims 1 to 3, **characterised in that** the said bead (312b), when viewed in axial section, has a substantially circular contour giving it a globally toroidal geometry.

8. Connecting device (101, 401, 501) according to one of the preceding claims, **characterised in that** the ratio of the average thickness of the membrane (112a, 412a, 512a) measured between the said body of the joint (111) and the said bead (112b, 212b, 312b, 412b, 512b) to the thickness of said bead in the radial direction and in the unstressed state of the joint (110, 410, 510) is less than or equal to 0.9.

9. Connecting device (101, 401, 501) according to claim 8, **characterised in that** the said membrane (112a, 412a, 512a) has an average thickness, measured between the said body of the joint (111) and the said bead (112b, 212b, 312b, 412b, 512b) which is between 0.2 mm and 0.9 mm, and **in that** the said bead comprises, in the radial direction of the joint (110, 410, 510) in the unstressed state, a thickness of between 0.3 mm and 5 mm.

10. Connecting device (101, 401, 501) according to one of the preceding claims, **characterised in that** the said projecting axial wall (107) on the boss (104) is connected to the remainder of the insert (103, 403, 503) by a substantially radial connecting wall (105) forming a shoulder for said body of the joint (111), and **in that** this axial wall of the boss forms a free end (108) axially inside the insert in relation to the hose (T).

11. Connecting device (101, 401, 501) according to claims 2 and 10, **characterised in that** the first section (113) of the joint (110, 410, 510) extends axially beyond this free end (108) of the insert (103, 403, 503), enveloping it radially over at least part of its thickness.

12. Connecting device (101, 401, 501) according to one of the preceding claims, **characterised in that** the said insert (103, 403, 503) is metallic and **in that** the said joint (110, 410, 510) is based on at least:
- a rubber selected from the group consisting of the fluorocarbons (FKM), the ethylene and methyl acrylate copolymers (EAM) and the fluorosilicones (FVMQ); or
- a thermoplastic elastomer belonging to the family of thermoplastic vulcanisates (TPV).

13. Connecting device (101, 401, 501) according to claim 12, **characterised in that** the joint (110, 410, 510) has a compression set (CS) of less than 20% after 70 hours and at 200°C and is preferably based on a fluorocarbon rubber (FKM).

14. Connecting device (401, 501) according to one of the preceding claims, **characterised in that** the said joint (410, 510) has a plurality of sealing lips (412, 412' or 512, 512') which are substantially parallel to one another, which include the lip (412 or 512) adapted to bear on the connector (E) and at least one secondary sealing lip (412' or 512') extending from said joint body (411, 511) and adapted to bear either on the connector, while extending radially inwards, or on the hose (T) while extending radially outwards.

15. Connecting device (101, 401, 501) according to one of the preceding claims, **characterised in that** it further comprises an external socket (2) adapted to clamp radially an end part of said hose (T) so as to trap it by compression against the said insert (103, 403, 503), and a locking/unlocking member (7) for the connector (E), which may be actuated in rotation, for example, in order to move from a locking position to an unlocking position and *vice versa.*

16. Connecting device (101, 401, 501) according to one of the preceding claims, **characterised in that** it is equipped with the said hose (T) and the said connector (E) which are made of flexible and rigid materials, respectively.

## Patentansprüche

1. Vorrichtung (101, 401, 501) zur dichten Verbindung, insbesondere für einen Kreislauf zur Übertragung von Luft, insbesondere für einen Luftansaugkreislauf eines Kraftfahrzeugmotors, wobei die Vorrichtung dazu bestimmt ist, radial zwischen einem äußeren Rohr (T) und einem inneren Ansatzstück (E) montiert zu werden und zumindest aufweist:
- ein Einsatzteil (103, 403, 503), das einen Endbereich aufweist, der in der Lage ist, eine Dichtfunktion mit dem Ansatzstück abzusichern, und zumindest eine Erhebung (104) aufweist, die eine Axialwand (107) abgrenzt, die radial nach außen vorsteht und bestimmt ist, in Druck- bzw. Press- und Dichtberührung mit dem Rohr zu gelangen, und
- eine ringförmige Lippendichtvorrichtung (110, 410, 510), von der die oder zumindest eine Lippe (112, 412, 512) dazu bestimmt ist, dicht auf das Ansatzstück zu drücken, wobei diese mit einer radialen Innenfläche von der Erhebung fest verbunden ist,
**dadurch gekennzeichnet, dass** die oder zumindest eine der Lippen, die bestimmt ist, auf das Ansatzstück zu drücken, eine Entkopplungsmembran (112a, 412a, 512a) aufweist, die sich im nicht beanspruchten Zustand der Dichtung von dem mit der Erhebung fest verbundenen Dichtungskörper (111) her schräg radial nach innen erstreckt und die mit einer maximalen Radialdicke in einer Wulst (112b, 212b, 312b, 412b, 512b) endet, die in der Lage ist, radial gegen das Ansatzstück mit einem Berührungsdruck, der ausreichend ist, um die Dichtheit mit dem Ansatzstück sicherzustellen, insbesondere mit verringerten Luftdrücken im Kreislauf, gedrückt zu werden, und wobei die Membran in der Lage ist, die bei der Verwendung erzeugten Vibrationen auszunehmen, wobei diese Membran eine radial äußere, erste Fläche (112aa), die zu der Wand (107) der Erhebung (104) gedreht ist, und eine radial innere, zweite Fläche (112ab) aufweist, die dazu bestimmt ist, zum Ansatzstück hin gedreht zu werden und die zwischen dem Dichtungskörper und der Wulst eine im Axialschnitt durchgehende Eintiefung, d.h. eine durchgehend konkave Form, beispielsweise im Wesentlichen als Kreisbogen, aufweist.

2. Verbindungsvorrichtung (101, 401, 501) nach Anspruch 1, **dadurch gekennzeichnet, dass** die Dichtung (110, 410, 510) einen ersten, radial äußeren Abschnitt (113) aufweist, der im Wesentlichen Zylinderform hat und der im Wesentlichen im rechten Winkel an einem seiner Endabschnitte mit einem zweiten Abschnitt (114) fortgesetzt wird, der im Wesentlichen Kranzform hat, um den Dichtungskörper (111) zu bilden, wobei die Membran (112a, 412a, 512a) sich im nicht beanspruchten Zustand der Dichtung im Wesentlichen konisch von dem zweiten Abschnitt ausgehend erstreckt und zur Wulst (112b, 212b, 312b, 412b, 512b) in Richtung des anderen Endabschnitts (113a) des ersten Abschnitts konvergiert.

3. Verbindungsvorrichtung (101, 401, 501) nach Anspruch 2, **dadurch gekennzeichnet, dass** die Dichtung (110, 410, 510) mit dem Einsatzteil (103, 403, 503) über ein Abformen der Erhebung (104) durch Einspritzen von Material, das zum Ausbilden der Dichtung bestimmt ist, in der Weise fest verbunden wird, dass der gesamte erste Abschnitt (113) und/oder der gesamte zweite Abschnitt (114) oder ein Teil von diesem/diesen der Dichtung mit der Innenfläche der Erhebung fest verbunden ist/sind.

4. Verbindungsvorrichtung (101, 401, 501) nach eine der Ansprüche 1 bis 3, **dadurch gekennzeichnet, dass** die Wulst (112b, 212b, 412b, 512b) im Axialschnitt betrachtet und im nicht beanspruchten Zustand der Dichtung (110, 410, 510) in Radialrichtung eine längliche Form aufweist.

5. Verbindungsvorrichtung (101, 401, 510) nach Anspruch 4, **dadurch gekennzeichnet, dass** die Wulst (112b, 412b, 512b) im Axialschnitt im Wesentlichen in ein Rechteck einbeschrieben ist, deren zwei langen Seiten jeweils die erste und zweite Fläche (112aa, 112ab) der Membran (112a, 412a, 512a) verlängern und deren radial innere kurze Seite eine konvexe Fläche (112ba) aufweist, die der Eintiefung der zweiten Fläche eine andere Richtung gibt.

6. Verbindungsvorrichtung (101, 401, 501) nach Anspruch 5, **dadurch gekennzeichnet, dass** die konvexe Fläche (112ba) im Wesentlichen im rechten Winkel durch eine der langen Seiten des Rechtecks verlängert wird, wobei eine radiale Abflachung (112bb) durch die Wulst (112b, 412b, 512b) gebildet wird, und zwar im nicht beanspruchten Zustand der Dichtung (110, 410, 510).

7. Verbindungsvorrichtung (101, 401, 501) nach einem der Ansprüche 1 bis 3, **dadurch gekennzeichnet, dass** die Wulst (312b) im Axialschnitt eine im wesentlichen kreisförmige Kontur aufweist, die dieser eine insgesamt torische Geometrie verleiht.

8. Verbindungsvorrichtung (101, 401, 501) nach einem der vorhergehenden Ansprüche, **dadurch gekennzeichnet, dass** das Verhältnis der mittleren Dicke der Membran (112a, 412a, 512a), die zwischen dem Dichtungskörper (111) und der Wulst (112b, 212b, 312b, 412b, 512b) gemessen wird, zur Dicke der Wulst in Radialrichtung und im nicht beanspruchten Zustand der Dichtung (110, 410, 510) kleiner als oder gleich 0,9 ist.

9. Verbindungsvorrichtung (101, 401, 501) nach Anspruch 8, **dadurch gekennzeichnet, dass** die Membran (112a, 412a, 512a) eine mittlere Dicke, die zwischen dem Dichtungskörper (111) und der Wulst (112b, 212b, 312b, 412b, 512b) gemessen wird, aufweist, die zwischen 0,2 mm und 0,9 mm ist, und dass die Wulst in Radialrichtung der Dichtung (110, 410, 510) im nicht beanspruchten Zustand eine Dicke aufweist, die zwischen 0,3 mm und 5 mm beträgt.

10. Verbindungsvorrichtung (101, 401, 501) nach einem der vorhergehenden Ansprüche, **dadurch gekennzeichnet, dass** die hervorstehende Axialwand (107), die die Erhebung (104) aufweist, mit dem Rest des Einsatzteils (103, 403, 503) über eine im Wesentlichen radiale Verbindungswand (105) verbunden ist, die für den Dichtungskörper (111) einen Absatz bildet, und dass die Axialwand der Erhebung einen axial inneren freien Endabschnitt (108) des Einsatzteils in Bezug auf das Rohr (T) bildet.

11. Verbindungsvorrichtung (101, 401, 501) nach den Ansprüche 2 und 10, **dadurch gekennzeichnet, dass** der erste Abschnitt (113) der Dichtung (110, 410, 510) axial über diesen freien Endabschnitt (108) des Einsatzteils (103, 403, 503) hinausgeht, wobei eine radiale Umhüllung über zumindest einen Teil seiner Dicke erfolgt.

12. Verbindungsvorrichtung (101, 401, 501) nach einem der vorhergehenden Ansprüche, **dadurch gekennzeichnet, dass** das Einsatzteil (103, 403, 50) metallisch ist und dass die Dichtung (110, 410, 510) basiert auf zumindest:
- einem Kautschuk, der aus der Gruppe ausgewählt wurde, die durch Fluorkohlenstoffe (FKM), Ethylencopolymere und Methylacrylatcopolymere (EAM) und Fluorsilikone (FVMQ) gebildet wird, oder
- einem thermoplastischem Elastomer, das zur Familie der thermoplastischen Vulkanisate (TPV) gehört.

13. Verbindungsvorrichtung (101, 401, 501) nach Anspruch 12, **dadurch gekennzeichnet, dass** die Dichtung (110, 410, 510) eine bleibende Kompressionsverformung (CS) nach 70 Stunden und bei 200°C aufweist, die kleiner als 20% ist, und vorzugsweise auf Fluorkohlenstoffkautschuk (FKM) basiert.

14. Verbindungsvorrichtung (401, 501) nach einem der vorhergehenden Ansprüche, **dadurch gekennzeichnet, dass** die Dichtung (410, 510) eine Vielzahl an Dichtungslippen (412, 412' oder 512, 512') aufweist, die im Wesentlichen parallel zueinander sind und die die Lippe (412, 512), die bestimmt ist, auf das Ansatzstück (E) zu drücken, und zumindest eine Sekundärdichtlippe (412' oder 512') beinhalten, die sich von dem Dichtungskörper (411, 511) erstreckt und die dazu bestimmt ist, entweder auf das Ansatzstück sich radial nach innen erstreckend oder auf das Rohr (T) sich radial nach außen erstreckend zu drücken.

15. Verbindungsvorrichtung (101, 401, 501) nach einem der vorhergehenden Ansprüche, **dadurch gekennzeichnet, dass** diese ferner eine äußere Buchse (2), die bestimmt ist, einen Teil des Endabschnitts des Rohrs (T) in der Weise radial zu drücken, dass dieser durch Kompression gegen das Einsatzteil (103, 403, 503) eingeschlossen wird, und eine Verriegelungs-/Enriegelungseinrichtung (7) des Ansatzstücks (E) aufweist, die beispielsweise zur Rotation betätigbar ist, um von einer Verriegelungsposition zu einer Entriegelungsposition und umgekehrt zu laufen.

16. Verbindungsvorrichtung (101, 401, 501) nach einem der vorhergehenden Ansprüche, **dadurch gekennzeichnet, dass** diese mit dem Rohr (T) und dem Einsatzteil (E) ausgerüstet sind, die aus weichem bzw. starrem Materialien ausgeführt sind.
